# EUROPEAN PATENT SPECIFICATION

(11) **EP 2 660 577 B1**
(45) Date of publication and mention of the grant of the patent: **28.12.2016**
(21) Application number: 12742224.4
(22) Date of filing: 30.01.2012
(51) Int. Cl.: G01L 19/04, G01L 23/10, G01L 9/00

(54) **PRESSURE SENSOR ELEMENT**
DRUCKSENSORELEMENT
ÉLÉMENT DE CAPTEUR DE PRESSION

(30) Priority: 31.01.2011 JP 2011018715
(43) Date of publication of application: 06.11.2013
(73) Proprietor: Mikuni Corporation, Tokyo 101-0021 (JP)
(72) Inventor: TAKAHASHI Kyou, Morioka, Iwate 020-0857 (JP); ENDO Haruyuki, Morioka, Iwate 020-0857 (JP); FUKUI Katsuhiko, Iwate-gun Iwate 020-0188 (JP); MATSUMOTO Sou, Iwate-gun Iwate 020-0188 (JP)
(74) Representative: Prüfer & Partner mbB Patentanwälte · Rechtsanwälte
(86) International application number: PCT/JP2012/052021
(87) International publication number: WO 2012/105514

(56) References cited:
- WO-A1-2009/019834
- JP-A- 7 077 474
- JP-A- 7 086 656
- JP-A- H09 236 504
- US-A- 4 445 384
- US-A- 6 076 408
- SCHRODER A ET AL: "A capacitance ultrasonic transducer for high-temperature applications", IEEE TRANSACTIONS ON ULTRASONICS, FERROELECTRICS AND FREQUENCY CONTROL, IEEE, US, vol. 51, no. 7, 1 July 2004 (2004-07-01), pages 896-907, XP011368627, ISSN: 0885-3010, DOI: 10.1109/TUFFC.2004.1320750

## Description

### Technical Field

This invention relates to a pressure sensor element which is used in a high-temperature environment, for example, the pressure sensor element attached to a glow plug of an internal combustion engine.

### Background Art

Temperature drift is known as a problem which is caused when a piezoelectric element is used in a high-temperature environment. For example, as described in Patent Document 1, the temperature drift is occasionally caused from a decrease of electrical resistance of the piezoelectric element due to an increase of temperature. According to Patent Document 1, the temperature drift is prevented when the pressure sensor element is formed with a piezoelectric element made of a monocrystalline material represented by a particular formula. For example, each of Patent Document 2 and Patent Document 3 also discloses a technique relating to temperature correction. According to Patent Document 2, unlike Patent Document 1, the electrical resistance of the piezoelectric element is considered to increase due to the increase of temperature. Accordingly, the piezoelectric element of Patent Document 2 is attached with a temperature correction member having an electrical resistance which decreases as the temperature increases so that the temperature correction is done. In order to avoid the influence of the electrostatic capacity of the piezoelectric element which increases as the temperature increases, the piezoelectric element of Patent Document 3 is attached with a temperature compensation element having electrostatic capacity which decreases as the temperature increases.

### Prior Art Documents

### Patent Document(s)

Patent Document 1: JP A 2010-185852
Patent Document 2: JP U H4-115042
Patent Document 3: JP A H8-50072

Further prior art document US 4,445,384 discloses a pressure sensor element with a piezoelectric element and four high-resistance material covering layers, two of each are arranged to respective both sides of the piezoelectric element and respectively two high-resistance material covering layers embedding at least one electrode. The disclosed pressure sensor eliminates the need to connect the top capacitative electrode to the electronics of a semiconductor substrate.

A further prior art document of Schroder et al: "A capacitance ultrasonic transducer for high-temperature applications", ieee transactions on ultrasonics, ferroelectrics and frequency control, ieee, us, vol. 51, no. 7, 1 July 2004, pages 896-907, discloses an ultrasonic capacitance transducer which design is based on a metallic membrane foil and a backplate made of an electrically conducting substrate coated with an insulation layer. JP H09 236504 A discloses a piezoelectric pressure sensor with a shield part acting as an electric shield for a piezoelectric element part. This prior art documents define the general state of the art.

Further prior art document JP 7 086656 A discloses a three-layer piezoelectric thin film element, consisting of at least a lower electrode, a piezoelectric body layer consisting of piezoelectric films and an upper electrode formed on a substrate surface. The objective is to provide an element with high dielectric strength, without secular change, with excellent durability and practical worth.

### Summary of Invention

### Technical Problem

The solution described in each of Patent Documents 1 to 3 is not generally applicable to the various existing piezoelectric elements each having the problem of the temperature drift.
Patent Document 2: JP U H4-115042
Patent Document 3: JP A H8-50072

Further prior art document US 4,445,384 discloses a pressure sensor element with a piezoelectric element and four high-resistance material covering layers, two of each are arranged to respective both sides of the piezoelectric element and respectively two high-resistance material covering layers embedding at least one electrode. The disclosed pressure sensor eliminates the need to connect the top capacitative electrode to the electronics of a semiconductor substrate.

A further prior art document of Schroder et al: "A capacitance ultrasonic transducer for high-temperature applications", ieee transactions on ultrasonics, ferroelectrics and frequency control, ieee, us, vol. 51, no. 7, 1 July 2004, pages 896-907, discloses an ultrasonic capacitance transducer which design is based on a metallic membrane foil and a backplate made of an electrically conducting substrate coated with an insulation layer. JP H09 236504 A discloses a piezoelectric pressure sensor with a shield part acting as an electric shield for a piezoelectric element part. This prior art documents define the general state of the art.

US 6,076,408 A discloses a pressure sensor element having the features of the preamble of claim 1. Another pressure sensor element is known from US 4,445,384 A. Further prior art document JP 7 086656 A discloses a three-layer piezoelectric thin film element, consisting of at least a lower electrode, a piezoelectric body layer consisting of piezoelectric films and an upper electrode formed on a substrate surface.

### Summary of Invention

### Technical Problem

The solution described in each of Patent Documents 1 to 3 is not generally applicable to the various existing piezoelectric elements each having the problem of the temperature drift.

It is therefore the object of the present invention to provide a pressure sensor element comprising a highly versatile structure which is capable of overcoming the problem of the temperature drift in a high temperature environment.

### Solution to Problem

This object is achieved by the pressure sensor element having the features of claim 1. The present invention is further developed as defined in the dependent claims..

### Advantageous Effects of Invention

According to the present invention, the piezoelectric element is covered with the high-resistance material film so that it is possible to prevent an electrical resistance of the pressure sensor element from largely decreasing due to an increase of temperature.

An appreciation of the objectives of the present invention and a more complete understanding of its structure may be had by studying the following description of the preferred embodiment and by referring to the accompanying drawings.

### Brief Description of Drawings

Fig. 1 is a side view schematically showing a structure of a pressure sensor element according to an embodiment of the present invention.
Fig. 2 is a side view schematically showing a structure of another pressure sensor element according to the embodiment of the present invention.
Fig. 3 is a collection of schematic diagram and graphs for showing an effect due to a decrease of electrical resistance of the pressure sensor element, wherein an output voltage of the pressure sensor element is measured under a state where the pressure sensor element is connected to a charge amplifier.
Fig. 4 is a graph showing an electrical resistance of each of an existing pressure sensor element and the pressure sensor element according to the embodiment of the present invention.
Fig. 5 is a graph showing a sensitivity of each of the existing pressure sensor element and the pressure sensor element according to the embodiment of the present invention.
Fig. 6 is a graph showing an electrical resistance change caused by a temperature change of each of the existing pressure sensor element and the pressure sensor element according to the embodiment of the present invention.
Fig. 7 is a graph showing a time-dependent change of an amount of electric charges of a drift current which is generated under the normal temperature in each of the existing pressure sensor element and the pressure sensor element according to the embodiment of the present invention.
Fig. 8 is a graph showing a time-dependent change of an amount of electric charges of another drift current which is generated under the temperature of 80 °C in each of the existing pressure sensor element and the pressure sensor element according to the embodiment of the present invention.

### Description of Embodiments

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

Hereinafter, an embodiment of the present invention (hereinafter, referred to as "the present embodiment") is described in detail with reference to Figures. When directions such as "upper" and "lower" are used in the following description, each of the directions does not define a direction in use but only shows a relative direction in each of Figures.

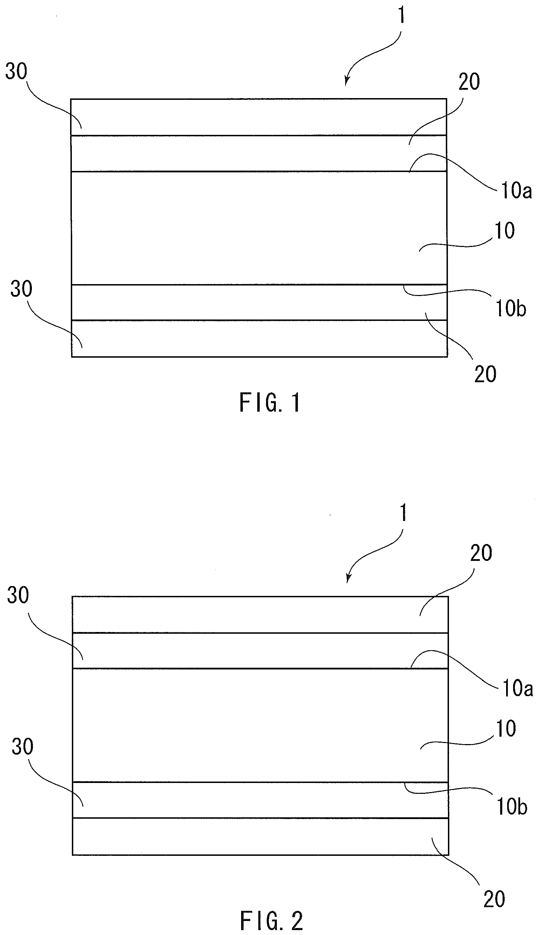

A pressure sensor element 1 according to the present embodiment is configured to be used in a high-temperature environment. For example, the pressure sensor element 1 is attached to a glow plug of an internal combustion engine and is used therein. As shown in Figs. 1 and 2, the pressure sensor element 1 comprises a piezoelectric element 10 made of a piezoelectric material and a high-resistance material film 20 made of a high electrical resistance material such as a dielectric material. The pressure sensor element 1 is formed to have a plate-like shape as a whole. In detail, the piezoelectric element 10 has an upper surface 10a and a lower surface 10b which have a relationship between the front and the back in a polarization direction. The whole upper surface 10a and the whole lower surface 10b are covered with the high-resistance material film 20. The illustrated pressure sensor element 1 further comprises electrodes (electrode films) 30 for extracting electric charges from the piezoelectric element 10. When the pressure sensor element 1 is formed with the electrodes 30, the high-resistance material film 20 may be formed to be sandwiched, at least in part, between the piezoelectric element 10 and the electrodes 30 (see Fig. 1). Alternatively, the electrodes 30 may be formed to be sandwiched, at least in part, between the piezoelectric element 10 and the high-resistance material film 20 (see Fig. 2). Moreover, as understood from Fig. 1, the electrodes 30 can be attached to the pressure sensor element 1 as necessary without being formed upon a production of the pressure sensor element 1. In the pressure sensor element 1 configured as described above, the piezoelectric element 10 is electrically connected with the high-resistance material film 20 in series. Accordingly, the pressure sensor element 1 can keep a high electrical resistance as a whole even if an electrical resistance of the piezoelectric element 10 decreases under the high-temperature environment.

The piezoelectric element 10 according to the present embodiment is made of a monocrystalline zinc oxide. Piezoelectric materials are roughly classified into monocrystalline materials and polycrystalline materials. The monocrystalline materials include a zinc oxide, a rock crystal, a langasite crystal, a gallium phosphate, a lithium niobate, a lithium tantalate, etc. The polycrystalline materials include a lead zirconate titanate, a barium titanate, etc. Although the material of the piezoelectric element 10 is not limited to the aforementioned monocrystalline zinc oxide, a material having a high electrical resistance is preferred for high-accurate pressure detection under the high-temperature environment.

The high-resistance material film 20 should be formed from the high electrical resistance material having an electrical resistance higher (i.e. larger) than the electrical resistance of the piezoelectric element 10 in a temperature range where the pressure sensor element 1 is used. The high electrical resistance material may be either an organic substance or an inorganic substance. Moreover, the high electrical resistance material may have any chemical composition. However, considering that the polarization of the piezoelectric element 10 polarizes the high electrical resistance material to act on the upper side and lower side electrodes 30, it is preferred to use the dielectric material that does not have pyroelectricity, for example, a glass material or a ceramic material. Specifically, one of SiO₂, Al₂O₃, AlN, MgO, SiAION and SiN, or a mixture of two or more of them may be used as the high electrical resistance material to be formed in one, two or more layers (i.e. multilayer). The high-resistance material film 20 according to the present embodiment is made of SiO₂ having amorphous structure.

The electrode 30 may be formed from either a single metal film or two or more (i.e. multi) metal films layered over one another. For example, one of Pt, Ti, Au, Cr, W, Pd, Ni, Ag, Al, Ta and Mo may be used as a material.

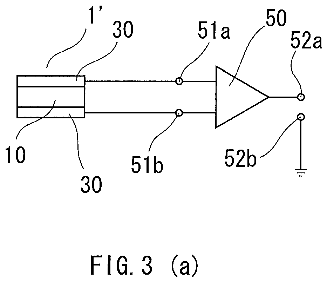

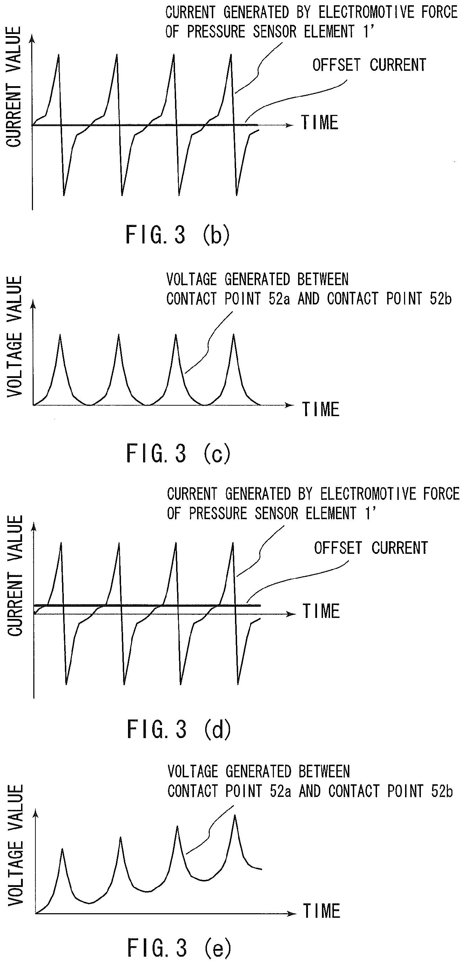

As shown in Fig. 3(a), an existing pressure sensor element 1' includes the electrodes 30 formed on an upper side and a lower side in the polarization direction of the piezoelectric element 10, respectively, but does not include the high-resistance material film 20. When the upper and lower surfaces of this pressure sensor element 1' are applied with a pressure, polarized electric charges are generated in proportion to the pressure. Accordingly, the applied pressure can be measured by measuring the polarized electric charges. Specifically, the pressure sensor element 1' is connected to a charge amplifier 50. The charge amplifier 50 integrates and amplifies a current generated between a contact point 51 a and a contact point 51 b by an electromotive force of the pressure sensor element 1'. A voltage, which is generated between a contact point 52a and a contact point 52b by the integral amplification, is measured as a pressure signal. However, when the measurement is thus performed, in fact, an offset voltage which is generated at an input terminal of the charge amplifier 50 supplies the pressure sensor element 1' with an offset current as an additional factor. Accordingly, the charge amplifier 50 integrates and amplifies the sum of the current due to the pressure and the offset current. This offset current has an amount depending on the electrical resistance of the pressure sensor element 1' and the offset voltage. The electrical resistance of the pressure sensor element 1' depends on a temperature. In detail, the electrical resistance of the pressure sensor element 1' typically decreases as the temperature increases. Accordingly, as described below, the accuracy of the measurement is degraded, for example, when the offset voltage having a predetermined voltage value is generated and the electrical resistance of the pressure sensor element 1' changes depending on the temperature. As shown in Fig. 3(b), since the electrical resistance of the pressure sensor element 1' is large under a room temperature, the offset current is negligibly small. Accordingly, only the current generated by the electromotive force of the pressure sensor element 1' is practically integrated and amplified so that the voltage generated between the contact point 52a and the contact point 52b of the charge amplifier 50 is observed as shown in Fig. 3(c). On the other hand, as shown in Fig. 3(d), since the electrical resistance of the pressure sensor element 1' decreases under a high temperature, the offset current increases. Accordingly, the integral amplification of the offset current generates a drift effect so that the voltage is generated between the contact point 52a and the contact point 52b of the charge amplifier 50 as shown in Fig. 3(e). As describe above, the accuracy of the measurement of the existing pressure sensor element 1' is degraded under the high temperature environment.

On the other hand, since the pressure sensor element 1 according to the present embodiment comprises the high-resistance material film 20, the pressure sensor element 1 has the high electrical resistance even under the high temperature environment so that the drift is hardly generated. Accordingly, the pressure sensor element 1 according to the present embodiment can keep the high accuracy of the measurement even under the high temperature environment. In other words, the high-resistance material film 20 is required to have the electrical resistance such that the drift is not practically generated in the temperature range where the pressure sensor element 1 is used. Specifically, the pressure sensor element 1 comprising the high-resistance material film 20 is required to have the electrical resistance of equal to or more than 1 × 10¹¹ Ω (i.e. combined resistance of the piezoelectric element 10 and the high-resistance material film 20 is required to be equal to or more than 1 × 10¹¹Ω) under the environment of the temperature between 400°C and 500°C. In order to satisfy the aforementioned conditions, the electrical resistance of the high-resistance material film 20 is preferred to be equal to or more than 1 × 10¹¹Ω under an ordinary temperature. SiO₂ having amorphous structure satisfies the aforementioned conditions and is preferable for the material of the high-resistance material film 20.

In order to prevent the drift, the high-resistance material film 20 preferably has a thick thickness to make its electrical resistance high. However, in order to transfer the electric charges generated in the piezoelectric element 10 to the electrode 30 without loss, it is preferable that the thickness is thin. Moreover, when the thickness of the high-resistance material film 20 is excessively thin (specifically, when being thinner than 0.1µm), it is difficult to cover a roughness (irregularities) of the surface of the piezoelectric element 10. On the other hand, when the thickness of the high-resistance material film 20 is excessively thick (specifically, when being thicker than 10µm), the high-resistance material film 20 might crack. Moreover, since the high-resistance material film 20 is connected with the piezoelectric element 10 in series to serve as a capacitance material layer and a stress-buffering layer, the improvement of the sensitivity of the piezoelectric element and the increase of the electric resistance of the element have a trade-off relation therebetween. Considering the above described various conditions, when the high-resistance material film 20 is formed from SiO₂ having amorphous structure and an electrical resistivity of 1 × 10¹¹Ω•cm to 1 × 10¹⁸Ω•cm, both inclusive (preferably, 1 × 10¹⁴Ω•cm to 1 × 10¹⁸Ω•cm, both inclusive), it is preferable that the thickness of the high-resistance material film 20 is 0.1µm to 10µm, both inclusive.

The high-resistance material film 20 according to the present embodiment can be formed by dipping the piezoelectric element 10 in a glass coat liquid made of a high-resistance material, followed by drying the piezoelectric element 10. The high-resistance material film 20 may be also formed via one of a sol-gel process, a printing process, a sputtering process, an evaporation process and a chemical vapor deposition (CVD) process. The high-resistance material film 20 may be formed on only one of the upper surface 10a and the lower surface 10b of the piezoelectric element 10. Moreover, the high-resistance material film 20 may cover not the whole upper surface 10a (lower surface 10b) but a part of the upper surface 10a (lower surface 10b). Moreover, the high-resistance material film 20 may be formed not only on the upper surface 10a and the lower surface 10b but also on a side surface. Moreover, the thickness of the high-resistance material film 20 on the upper surface 10a and the thickness of the high-resistance material film 20 on the lower surface 10b may be either same as each other or different from each other. In other words, it is enough that the high-resistance material film 20 covers, at least in part, at least one of the upper surface 10a and the lower surface 10b.

### Examples

Hereinafter, the present invention is described in further detail by the use of specific examples.

### (Example)

At first, a plate-like piezoelectric element was made of a monocrystalline zinc oxide. The piezoelectric element had an upper surface and a lower surface each having a size of 2mm × 2mm. The piezoelectric element had a thickness of 0.5 mm. The piezoelectric element was polarized in an up-down direction.

Then, the whole piezoelectric element was coated with SiO₂ film having amorphous structure. Specifically, the piezoelectric element was dipped in a glass coating agent (SSL-SD2000, Produced by Exousia Inc.) and dried under a room temperature after being taken out. After being dried, the piezoelectric element was placed in an oven to be heated by 1 hour under 250 °C. The upper surface and the lower surface of the piezoelectric element after heating are covered with the SiO₂ film (high-resistance material film) having a thickness of 2µm. Finally, the upper side and the lower side of the high-resistance material film were attached with electrodes. Example of a pressure sensor element was obtained via the aforementioned process. In this Example, the high-resistance material film was formed on the piezoelectric element having a chip form. However, it is possible to divide a wafer made of a piezoelectric material into chips via dicing method or the like after the high-resistance material film is formed on the wafer.

### (Comparative Example)

Similar to Example, a plate-like piezoelectric element was made of a monocrystalline zinc oxide. The piezoelectric element had an upper surface and a lower surface each having a size of 2mm × 2mm. The piezoelectric element had a thickness of 0.5 mm. The piezoelectric element was polarized in the up-down direction. The upper side and the lower side of the piezoelectric element were attached with electrodes so that Comparative Example of a pressure sensor element was obtained. The pressure sensor element of Comparative Example comprised no high-resistance material film. In other words, the pressure sensor element of Comparative Example was an existing pressure sensor element.

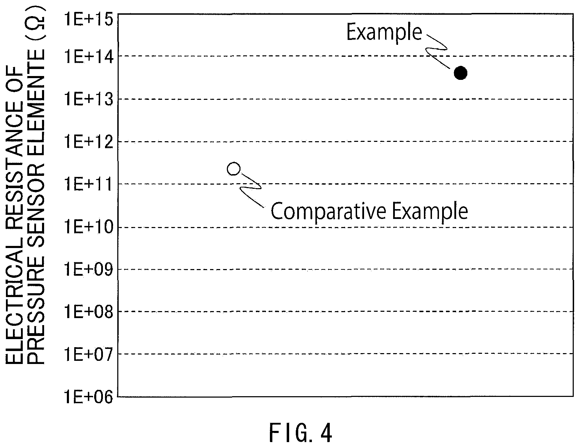

An electrical resistance under the normal temperature of each of the pressure sensor element of Example and the pressure sensor element of Comparative Example was measured. As shown in Fig. 4, the pressure sensor element of Example comprising the high-resistance material film had the electrical resistance greatly improved in comparison with the pressure sensor element of Comparative Example.

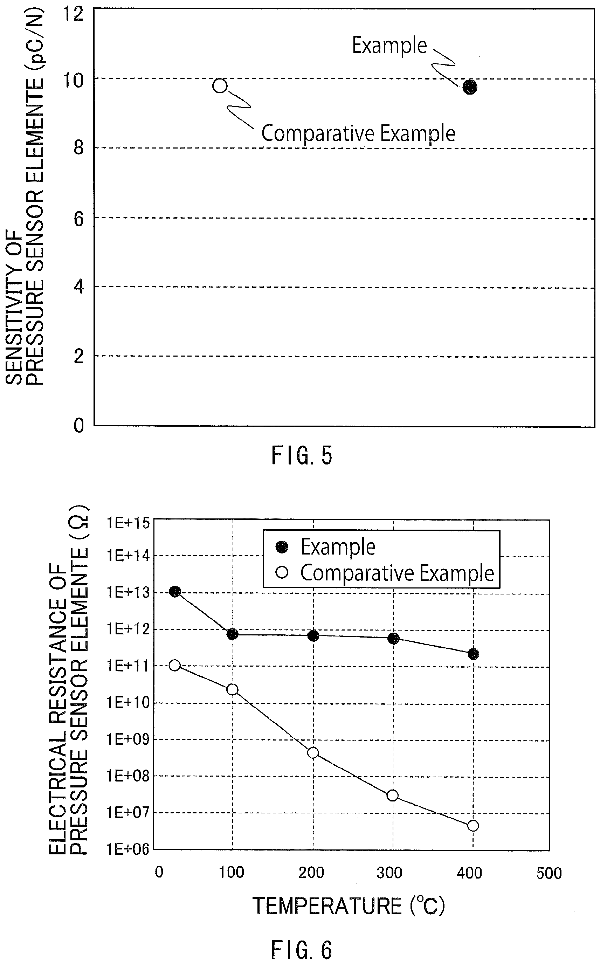

A sensitivity of each of the pressure sensor element of Example and the pressure sensor element of Comparative Example was measured. The sensitivity was measured by measuring an amount of electric charges generated when the pressure sensor element was directly applied with a load. As shown in Fig. 5, the pressure sensor element of Example and the pressure sensor element of Comparative Example had the same sensitivity. As can be seen from the result of the measurement of the electrical resistances and the sensitivities, the formed high-resistance material film improved the electrical resistance without largely affecting the sensitivity of the pressure sensor element.

The electrical resistance of each of the pressure sensor element of Example and the pressure sensor element of Comparative Example was measured under a state where the temperature was changed in a range from the room temperature to 400°C. As shown in Fig. 6, the effect of the present invention was more remarkable as the temperature was higher. For example, under the temperature of 400°C, the electrical resistance of the pressure sensor element of Comparative Example greatly decreased while the electrical resistance of the pressure sensor element of Example slightly decreased. In this case, the electrical resistance of the SiO₂ film, which was the high-resistance material film of the present Example, was particularly larger than the electrical resistance of the monocrystalline zinc oxide. More specifically, it was conceivable that the electrical resistance of the high-resistance material film of the present Example was nearly equal to the electrical resistance shown by the pressure sensor element of the present Example. Although the temperature was repeatedly raised and lowered between the room temperature and 400°C for this measurement, neither the piezoelectric element nor the high-resistance material film of the pressure sensor element of Example cracked or peeled off. Accordingly, it was understood that the pressure sensor element according to the present invention had high reliability even in temperature cyclic loading.

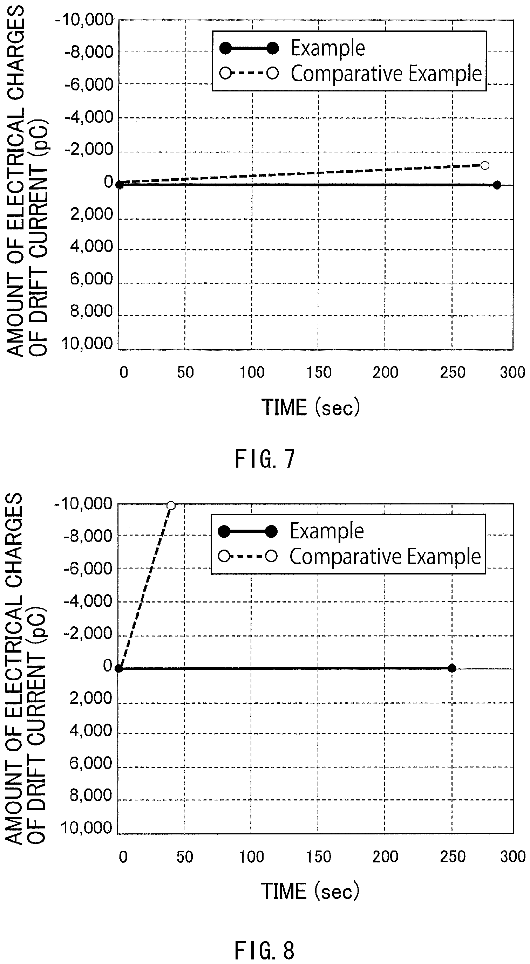

Drift suppressing effect according to the present invention was tested. Specifically, as shown in Fig. 3(a), each of the pressure sensor element of Example and the pressure sensor element of Comparative Example was connected to a charge amplifier. Then, an output voltage between the contact point 52a and the contact point 52b was measured under a state where the pressure sensor element was applied with no pressure. An amount of electric charges of a drift current was obtained from the measured output voltage. As shown in Fig. 7, under the room temperature, the amount of the electric charges of the pressure sensor element of Comparative Example increased (the drift becomes larger) over time. On the other hand, the drift was not observed about the pressure sensor element of Example. Moreover, as shown in Fig. 8, under the temperature of 80°C, the drift of the pressure sensor element of Comparative Example was greatly larger in comparison with the result of the measurement under the room temperature. On the other hand, the drift of the pressure sensor element of Example was very slight.

The amount of the electric charges of each of the drift currents measured under the room temperature and 80°C is shown in Table 1. As shown in Table 1, in comparison with the pressure sensor element of Comparative Example, the amount of the electric charges of the pressure sensor element of Example was about 1/100 under the room temperature and about 1/1000 under the temperature of 80°C.

**Table 1**

| Temperature under measurement environment | Comparative Example | Example | Example / Comparative Example |
|---|---|---|---|
| room temperature | -3.7 pC/sec | -0.036 pC/sec | about 1/100 |
| 80°C | -270 pC/sec | -0.39 pC/sec | about 1/1000 |

The present application is based on a Japanese patent application of JP2011-18715 filed before the Japan Patent Office on January 31, 2011, the contents of which are incorporated herein by reference.

### Reference Signs List

- 1,1': pressure sensor element
- 10: piezoelectric element
- 10a: upper surface
- 10b: lower surface
- 20: high-resistance material film
- 30: electrode (electrode film)
- 50: charge amplifier
- 51a, 51b: contact point
- 52a, 52b: contact point

## Claims

1. A pressure sensor element comprising:
a piezoelectric element (10) having an upper surface (10a) and a lower surface (10b); and
electrodes (30) for extracting electric charges from the piezoelectric element (10), wherein the electrodes (30) sandwich the piezoelectric element (10) therebetween and each of the electrodes (30) is connected to a corresponding contact point (51 a, 51 b) of a charge amplifier (50) for measurement of pressure applied to the pressure sensor element,
**characterized by**
a high-resistance material film (20) covering, at least in part, at least one of the upper surface (10a) and the lower surface (10b), the high-resistance material film (20) having an electrical resistance larger than an electrical resistance of the piezoelectric element (10);
wherein a combined resistance of the piezoelectric element (10) and the high-resistance material film (20) is equal to or more than 1 × 10¹¹Ω under an environment of the temperature between 400°C and 500°C.

2. The pressure sensor element as recited in claim 1, wherein at least one of the upper surface (10a) and the lower surface (10b) of the piezoelectric element (10) is wholly covered with the high-resistance material film (20).

3. The pressure sensor element as recited in claim 1 or 2, wherein the high-resistance material film (20) is made of a dielectric material.

4. The pressure sensor element as recited in one of claims 1 to 3, wherein the high-resistance material film (20) has an electrical resistivity of 1 × 10¹¹Ω•cm to 1 × 10¹⁸Ω•cm, both inclusive.

5. The pressure sensor element as recited in one of claims 1 to 4, wherein:
the high-resistance material film (20) is made of SiO₂ having amorphous structure; and
the high-resistance material film (20) has a thickness of 0.1µm to 10µm, both inclusive.

6. The pressure sensor element as recited in one of claims 1 to 5, wherein the high-resistance material film (20) is formed to be sandwiched, at least in part, between the piezoelectric element (10) and the electrode (30).

7. The pressure sensor element as recited in one of claims 1 to 6, wherein:
the electrode (30) is formed from one or more metal films; and
each of the metal films is made of one of Pt, Ti, Au, Cr, W, Pd, Ni, Ag, Al, Ta and Mo.

8. The pressure sensor element as recited in one of claims 1 to 7, wherein the piezoelectric element (10) is made of a zinc oxide.

## Patentansprüche

1. Drucksensorelement mit:
einem piezoelektrischen Element (10), das eine obere Fläche (10a) und eine untere Fläche (10b) hat; und
Elektroden (30) zum Extrahieren von elektrischen Ladungen aus dem piezoelektrischen Element (10), wobei die Elektroden (30) das piezoelektrische Element (10) dazwischen einfassen und die Elektroden (30) jeweils mit einem entsprechenden Kontaktpunkt (51a, 51b) eines Ladungsverstärkers (50) zur Messung eines Drucks verbunden sind, der auf das Drucksensorelement aufgebracht wird,
**gekennzeichnet durch**
einen Hochwiderstandsmaterialfilm (20), der zumindest teilweise zumindest entweder die obere Fläche (10a) oder die untere Fläche (10b) abdeckt, wobei der Hochwiderstandsmaterialfilm (20) einen elektrischen Widerstand hat, der größer ist als ein elektrischer Widerstand des piezoelektrischen Elements (10);
wobei ein kombinierter Widerstand des piezoelektrischen Elements (10) und des Hochwiderstandsmaterialfilms (20) gleich oder größer ist als 1 × 10¹¹Ω bei einer Umgebungstemperatur zwischen 400°C und 500°C.

2. Drucksensorelement gemäß Anspruch 1, wobei zumindest entweder die obere Fläche (10a) oder die untere Fläche (10b) des piezoelektrischen Elements (10) vollständig von dem Hochwiderstandsmaterialfilm (20) abgedeckt ist.

3. Drucksensorelement gemäß Anspruch 1 oder 2, wobei der Hochwiderstandsmaterialfilm (20) aus einem dielektrischen Material besteht.

4. Drucksensorelement gemäß einem der Ansprüche 1 bis 3, wobei der Hochwiderstandsmaterialfilm (20) einen spezifischen elektrischen Widerstand von einschließlich 1 × 10¹¹ Ω•cm bis einschließlich 1 × 10¹⁸ Ω•cm hat.

5. Drucksensorelement gemäß einem der Ansprüche 1 bis 4, wobei:
der Hochwiderstandsmaterialfilm (20) aus SiO₂ mit einer amorphen Struktur besteht; und
der Hochwiderstandsmaterialfilm (20) eine Dicke von einschließlich 0,1 µm bis einschließlich 10 µm hat.

6. Drucksensorelement gemäß einem der Ansprüche 1 bis 5, wobei der Hochwiderstandsmaterialfilm (20) so ausgebildet ist, dass er zumindest teilweise zwischen dem piezoelektrischen Element (10) und der Elektrode (30) eingefasst ist.

7. Drucksensorelement gemäß einem der Ansprüche 1 bis 6, wobei:
Die Elektrode (30) aus einem oder mehreren Metallfilmen ausgebildet ist; und
die Metallfilme jeweils entweder aus Pt, Ti, Au, Cr, W, Pd, Ni, Ag, Al, Ta oder Mo bestehen.

8. Drucksensorelement gemäß einem der Ansprüche 1 bis 7, wobei das piezoelektrische Element (10) aus Zinkoxid besteht.

## Revendications

1. Elément détecteur de pression comprenant :
un élément piézo-électrique (10) comportant une surface supérieure (10a) et une surface inférieure (10b) ; et
des électrodes (30) destinées à extraire des charges électriques à partir de l'élément piézo-électrique (10), dans lequel les électrodes (30) intercalent l'élément piézo-électrique (10) entre elles et chacune des électrodes (30) est raccordée à un point de contact correspondant (51a, 51b) d'un amplificateur de charge (50) afin d'assurer la mesure de la pression appliquée à l'élément détecteur de pression,
**caractérisé par**
un film de matériau à haute résistance (20) recouvrant, au moins partiellement, au moins l'une de la surface supérieure (10a) et de la surface inférieure (10b), le film de matériau à haute résistance (20) présentant une résistance électrique supérieure à une résistance électrique de l'élément piézo-électrique (10) ;
dans lequel une résistance combinée de l'élément piézo-électrique (10) et du film de matériau à haute résistance (20) est supérieure ou égale à 1x10¹¹Ω dans un environnement à la température de 400°C à 500°C.

2. Elément détecteur de pression selon la revendication 1, dans lequel au moins l'une de la surface supérieure (10a) et de la surface inférieure (10b) de l'élément piézo-électrique (10) est entièrement recouverte par le film de matériau à haute résistance (20).

3. Elément détecteur de pression selon la revendication 1 ou 2, dans lequel le film de matériau à haute résistance (20) est composé d'un matériau diélectrique.

4. Elément détecteur de pression selon l'une des revendications 1 à 3, dans lequel le film de matériau à haute résistance (20) présente une résistivité électrique de 1x10¹¹Ω.cm à 1x10¹⁸Ω.cm, bornes comprises.

5. Elément détecteur de pression selon l'une des revendications 1 à 4, dans lequel : le film de matériau à haute résistance (20) est composé de SiO₂ présentant une structure amorphe ; et
le film de matériau à haute résistance (20) présente une épaisseur de 0,1 µm à 10 µm, bornes comprises.

6. Elément détecteur de pression selon l'une des revendications 1 à 5, dans lequel le film de matériau à haute résistance (20) est formé de manière à être intercalé, au moins partiellement, entre l'élément piézo-électrique (10) et l'électrode (30).

7. Elément détecteur de pression selon l'une des revendications 1 à 6, dans lequel :
l'électrode (30) est formée d'un ou plusieurs films métalliques ; et
chacun des films métalliques est composé de l'un du Pt, Ti, Au, Cr, W, Pd, Ni, Ag, Al, Ta et Mo.

8. Elément de détecteur de pression selon l'une des revendications 1 à 7, dans lequel l'élément piézo-électrique (10) est composé d'un oxyde de zinc.
